(19) Europäisches Patentamt
European Patent Office
Office européen des brevets

(11) **EP 1 703 198 B1**

(12) **FASCICULE DE BREVET EUROPEEN**

(45) Date de publication et mention
de la délivrance du brevet:
**02.09.2009 Bulletin 2009/36**

(51) Int Cl.:
*F21S 8/12* *(2006.01)*     *F21V 5/00* *(2006.01)*
*B60Q 1/20* *(2006.01)*

(21) Numéro de dépôt: **06290401.6**

(22) Date de dépôt: **10.03.2006**

(54) **Projecteur lumineux pour véhicule automobile de faible encombrement**

Kompakter Scheinwerfer für Kraftfahrzeuge

Compact headlamp for vehicles

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.03.2005 FR 0502549**

(43) Date de publication de la demande:
**20.09.2006 Bulletin 2006/38**

(73) Titulaire: **VALEO VISION**
**93012 Bobigny Cedex (FR)**

(72) Inventeur: **Albou, Pierre**
**75013 Paris (FR)**

(56) Documents cités:
**DE-A1- 10 312 364     FR-A- 2 602 305**
**US-A- 2 254 961**

## Description

L'invention est relative à un projecteur lumineux de faible encombrement pour véhicule automobile, donnant un faisceau lumineux à coupure, admettant un axe optique et comprenant une source lumineuse ayant un axe sensiblement horizontal s'étendant sensiblement perpendiculairement à l'axe optique du projecteur.

L'invention concerne plus particulièrement, mais non exclusivement, un projecteur lumineux du type antibrouillard.

Il est connu un projecteur équipé d'un réflecteur dont la surface est déterminée pour assurer le faisceau à coupure, c'est-à-dire que les rayons lumineux du faisceau réfléchi se trouvent essentiellement au-dessous d'une ligne de coupure qui peut être horizontale, ou qui peut être formée par une ligne brisée dans le cas d'un projecteur code. La source lumineuse utilisée est assez puissante pour que la fraction de la lumière émise vers l'arrière en direction du réflecteur suffise pour produire le faisceau lumineux souhaité. Pour éviter que la lumière émise vers l'avant par la source lumineuse crée un éblouissement par observation directe, on prévoit généralement un cache situé devant la source lumineuse. Une partie du flux lumineux n'est donc pas utilisée pour le faisceau d'éclairage, ce qui n'empêche pas de satisfaire aux conditions de photométrie pour le faisceau lumineux dans le cas d'une source de forte puissance.

Dans sa demande de brevet français non encore publiée N° 04 11 785, déposée le 4 novembre 2004, la Demanderesse divulgue un projecteur lumineux pour véhicule automobile du type donnant un faisceau à coupure. Dans ce projecteur, le cache habituellement situé devant la source lumineuse est supprimé et remplacée par une lentille qui est déterminée de façon à produire le faisceau à coupure. La suppression du cache autorise une utilisation plus complète du flux de la source et corrélativement une réduction de la puissance de celle-ci.

La réduction de la puissance de la source dans la demande de brevet N° 04 11 785 conduit à un allégement des contraintes thermiques dans le projecteur, ce qui rend possible une plus grande compacité en profondeur, notamment du fait d'une distance moindre entre la source et la glace fermant le projecteur.

Bien que le projecteur décrit dans la demande de brevet N° 04 11 785 apporte une amélioration sensible dans la voie d'un plus faible encombrement, il reste souhaitable de proposer d'autres solutions autorisant une plus grande compacité encore, notamment afin de faciliter l'intégration de nouvelles fonctions dans les projecteurs lumineux telles que par exemple la fonction d'éclairage de jour dite DRL (pour «Day Running Light» en anglais).

La présente invention a essentiellement pour objet de fournir un projecteur lumineux du genre défini précédemment qui permette d'obtenir un faisceau lumineux à coupure satisfaisant et qui soit d'une grande compacité.

Le projecteur lumineux de faible encombrement selon l'invention, pour véhicule automobile, donnant un faisceau lumineux à coupure, en particulier du type anti-brouillard, admettant un axe optique et comprenant une source lumineuse ayant un axe sensiblement horizontal s'étendant sensiblement perpendiculairement à l'axe optique du projecteur.

Conformément à l'invention, le projecteur ne comprend pas de réflecteur, et comporte devant la source lumineuse une lentille déterminée pour donner un faisceau lumineux à coupure.

Selon l'invention, la lentille est déterminée de telle manière que des rayons incidents extrêmes émis par la source soient réfractés, en sortie de la lentille, sensiblement parallèlement à l'axe optique, tandis que les autres rayons lumineux incidents émis par la source sont réfractés avec une inclinaison vers le bas par rapport à l'axe optique.

Le projecteur selon l'invention, brièvement décrit ci-dessus, autorise des modes de réalisation qui permettent de satisfaire pleinement aux règles normatives s'appliquant dans ce domaine technique. Ainsi, le projecteur selon l'invention donne lieu à des modes de réalisation conformes à la norme européenne en vigueur R19-2 et à la future norme R19-3, ainsi qu'aux normes correspondantes s'appliquant sur le territoire des Etats-Unis d'Amérique.

Par exemple, une conformité avec la norme R19-2 a été obtenue avec une simple lampe H8. Une lampe H7 ou H11 convient généralement dans les autres cas.

Selon un mode de réalisation particulier, la lentille comporte au moins une aile supérieure et/ou inférieure participant à la formation du faisceau lumineux à coupure et qui est sensiblement horizontale et perpendiculaire à l'axe optique. De plus, la lentille peut comporter également au moins une aile latérale gauche et/ou droite participant à la formation du faisceau lumineux à coupure et qui est sensiblement verticale et perpendiculaire à l'axe optique.

De préférence, la lentille comprend une face d'entrée située à proximité de la source. Avantageusement, la face d'entrée de la lentille est de type torique, sphérique ou cylindrique.

Selon un mode de réalisation particulier, la source lumineuse est une lampe avec filament axial et est disposée de manière sensiblement transversale. Par exemple, mais non exclusivement, la source lumineuse est une lampe à filament de type H7, H8 ou H11.

Selon un autre mode de réalisation particulier, la source lumineuse est de type à diode électroluminescente. La source lumineuse peut être formée de plusieurs diodes électroluminescentes groupées par exemple dans un module multi-puces.

Selon un autre mode de réalisation particulièrement compact du projecteur selon l'invention, la source lumineuse et la lentille sont formées en un seul bloc, la source lumineuse étant formée d'une ou plusieurs diodes électroluminescentes et la lentille étant formée d'un matériau synthétique thermorésistant qui est surmoulé au moins sur une surface lumineuse de la source.

De manière à réduire l'épaisseur de la lentille, dans certains modes de réalisation, celle-ci peut être du type lentille de Fresnel et comporter en sortie des parties fresnelisées.

D'autres aspects et avantages de la présente l'invention apparaîtront plus clairement à la lecture de la description de modes de réalisation particuliers qui va suivre, cette description étant donnée à titre d'exemple non limitatif et faite en référence aux dessins annexés, dans lesquels :

la Fig.1 est une vue générale en perspective montrant un projecteur selon l'invention, boîtier démonté, équipé d'une lampe à filament ;

la Fig.2 est une vue en perspective représentant sous une forme modélisé, un système optique selon l'invention composé d'une source lumineuse et d'une lentille dioptrique ;

la Fig.3 est une vue schématique de dessus de la face d'entrée de la lentille et de plans verticaux passant par le centre de la source et formant des angles différents avec l'axe optique ;

la Fig.4 est un schéma de la projection de la source lumineuse sur un plan oblique d'incidence, avec rayons incidents extrêmes sur la face d'entrée de la lentille ;

les Figs.5 et 6 montrent un choix de rayons dans une méthode particulière de construction appliquée à une source plane immergée dans une résine ;

la Fig.7 montrent un choix de rayons dans une méthode particulière de construction appliquée au cas d'un filament ;

la Fig.8 illustre les courbes isolux obtenues avec le projecteur des Figs.1 et 2 équipé d'une lampe à filament ;

la Fig.9 est une demi-vue en coupe montrant de manière schématique la structure générale d'une aile supérieure complétant la lentille dans sa partie haute ;

la Fig.10 est une demi-vue en perspective montrant des surfaces optiques obtenues pour une lentille selon l'invention incorporée dans un projecteur équipé d'une source lumineuse formée de plusieurs diodes électroluminescentes ; et

la Fig.11 illustre les courbes isolux obtenues avec un projecteur selon l'invention équipé d'une source de type à diode électroluminescente.

Il est maintenant décrit un premier mode de réalisation de l'invention sous la forme d'un projecteur antibrouillard 1 équipé d'une lampe à filament.

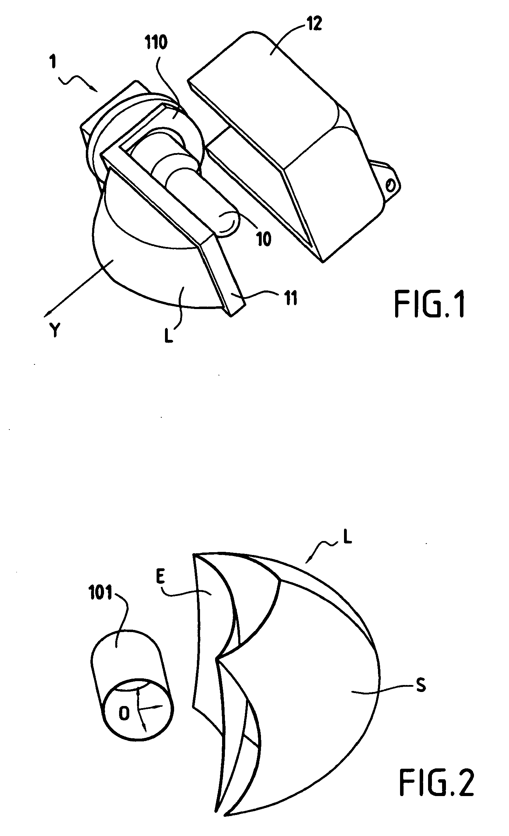

Comme montré à la Fig.1, le projecteur 1 ne comporte pas de réflecteur et comprend essentiellement une lampe à filament 10, une lentille L, un support de lentille-lampe 11 et un boîtier 12.

Dans cette première forme de réalisation de l'invention, la lampe 10 est une lampe avec filament axial, par exemple une lampe de type H7, H8 ou H11.

Conformément à l'invention, la lentille L est déterminée de telle manière que le projecteur 1 fournit un faisceau lumineux à coupure. Des principes de construction utilisables pour la définition des surfaces optiques de la lentille L selon l'invention sont décrits dans la suite de la description.

Dans ce mode de réalisation, le support 11 est constitué d'une pièce monobloc qui est surmoulée sur la lentille L. Le support 11 comporte une section 110 dans laquelle est aménagée une ouverture destinée au montage de la lampe 10.

Comme cela apparaît à la Fig.1, la lampe 10 est montée transversalement dans le projecteur 1 de telle manière que l'axe du filament de la lampe 10 est sensiblement horizontal et perpendiculaire à l'axe optique Y-Y du projecteur 1. De préférence, le montage de la lampe 10 est prévu de manière à autoriser un réglage optique en position de la lampe 10 par rapport à la lentille L.

Dans d'autres modes de réalisation de l'invention, la lampe 10 pourra être montée avec l'axe de filament s'étendant obliquement à l'axe optique du projecteur 1, c'est-à-dire, de manière à avoir un angle différent de 90˚ entre les deux axes.

Le matériau du boîtier 12 doit être choisi de manière à être apte à absorber les rayons lumineux émis par la partie arrière du filament de la lampe 10, c'est-à-dire, la partie du filament de la lampe 10 qui n'est pas en regard de la face d'entrée de la lentille L.

Cette propriété d'absorption du boîtier 12 empêche des rayons émis par la partie arrière du filament d'être réfléchis vers la lentille L et de perturber la distribution optique du faisceau lumineux à coupure émis par le projecteur 1.

De plus, le boîtier assure une fonction d'isolation optique de la lampe 10 par rapport à l'environnement extérieur, notamment lorsque le projecteur 1 est intégré dans un ensemble optique assurant d'autres fonctions d'éclairage /signalisation.

De préférence, un mécanisme (non représenté) destiné au réglage de l'angle de site du module optique devra être prévu et logé également dans le boîtier 12. Un tel mécanisme, connu de l'homme du métier, autorise un réglage du faisceau lumineux à coupure par rapport à l'horizon.

Comme montré à la Fig.2, dans ce premier mode de réalisation, la lentille L est de type ménisque.

La lentille L est représentée à la Fig.2 par ses surfaces optiques d'entrée E et de sortie S.

Le filament de la lampe 10 est, de façon connue dans ce domaine technique, modélisé par un cylindre 101. Ce cylindre 101 approxime la forme générale de l'enveloppe du filament qui est constitué généralement d'un fil enroulé hélicoïdalement.

Conformément à l'invention, la surface optique d'entrée E est choisie parmi différentes surfaces possibles, à savoir, une surface torique, une surface cylindrique et une surface sphérique.

Une fois la surface d'entrée E choisie, la surface optique de sortie S doit être déterminée de telle manière à obtenir le faisceau lumineux à coupure voulu.

Dans ce premier forme de réalisation, la surface optique d'entrée E est choisie comme étant une surface torique biconcave du côté filament. Une telle surface d'entrée est ici particulièrement intéressante compte tenu de l'angle solide élevé et des angles d'incidence réduits des rayons lumineux éclairant la surface E.

Conformément à l'invention, on choisit pour la surface optique de sortie S une courbe génératrice $G_h$ à deux dimensions (2D) qui doit respecter les contraintes suivantes :

1) Pour une source lumineuse ponctuelle située à l'origine O du repère spatial et des rayons lumineux issus de cette source et situés dans un plan horizontal, tous les rayons lumineux émergeants de la lentille L en $G_h$ n'ont d'intersections entre eux qu'en $G_h$ (Les rayons émergeants étant des demi-droites dont une extrémité est située sur $G_h$). La construction est ici en 2D et on considère que les rayons incidents ne sont déviés verticalement ni par la face d'entrée E ni par la face de sortie S. La non déviation verticale des rayons incidents par la face de sortie S le long de $G_h$ est une hypothèse de départ qui doit être vérifiée à posteriori.

2) La tangente à $G_h$ à son point d'intersection avec l'axe optique est perpendiculaire à l'axe optique.

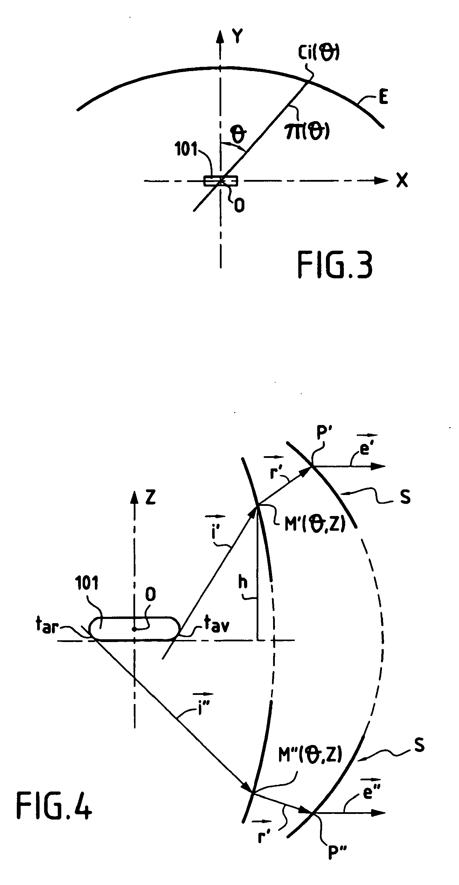

La construction de la lentille L selon l'invention est exposée ci-après en référence aux Figs.3 à 8.

Dans une première méthode, le principe de la construction de la lentille L repose essentiellement sur une projection du filament 101 dans une famille de plans verticaux π contenant l'axe vertical Z-Z passant par le centre O du filament et sur la définition dans ces plans π des rayons incidents extrêmes à considérer.

Les rayons incidents extrêmes émis par le filament 101 doivent émerger de la lentille L (face de sortie S) en étant contenus dans un plan horizontal. Les autres rayons incidents émis par le filament 101 sont réfractés avec une inclinaison vers le bas par rapport à l'axe optique Y.

On considère donc un plan vertical π(θ) qui passe par le centre O du filament 101 et qui forme un angle θ avec l'axe optique Y-Y. L'angle θ peut varier de 0 à une valeur correspondant à l'un des bords verticaux de la face d'entrée E.

On désigne par $C_i(θ)$ l'intersection verticale du plan π(θ) avec la face d'entrée E. On désigne également par M(θ,z) un point d'altitude z situé sur $C_i(θ)$.

Pour chaque point M(θ,z), on construit un rayon incident $\vec{i}$ en ce point, issu de la projection du filament 101 dans le plan π(θ).

Le rayon incident $\vec{i}$ est contenu dans le plan π

(θ). Le rayon $\vec{r}$ issu du rayons incident $\vec{i}$ et réfracté par la face d'entrée E est ensuite construit et on écrit que le rayon $\vec{e}$ issu du rayon $\vec{r}$ et réfracté par la face de sortie S de la lentille L est un rayon horizontal.

Les rayons incidents extrêmes $\vec{i}'$ et $\vec{i}''$ à considérer dans le plan π(θ) sont ceux tangents respectivement aux contours extrêmes arrière et avant de la projection orthogonale du filament 101 dans le plan π(θ). La projection orthogonale du filament 101 dans le plan π(θ) présente des extrémités en arc d'ellipse. Les points de tangence sur les contours extrêmes arrière et avant de la projection orthogonale du filament 101 sont repérés $t_{ar}$ et $t_{av}$ à la Fig.4.

Dans une deuxième méthode de construction, les rayons limites sont déterminés dans l'espace. Cette méthode est indispensable dans le cas où l'émetteur lumineux est immergé dans un milieu d'indice différent du milieu de propagation de la lumière jusqu'à la face d'entrée E de la lentille.

En effet, dans un tel cas, il est impossible de projeter l'optique primaire que constitue le dioptre de sortie de la lumière hors de la source. Certaines diodes LED dont les puces sont revêtues d'une résine d'épaisseur significative sont dans ce cas.

Lorsque l'émetteur lumineux peut être considéré comme placé dans l'air, par exemple un filament approximé par un cylindre, cette deuxième méthode conduit à des surfaces pratiquement identiques à celles obtenues par la première méthode qui lui est alors préférée.

Dans cette deuxième méthode, les rayons $\vec{i}'$ et $\vec{i}''$ sont définis comme étant les rayons réfractés par le dioptre de sortie de la source, correspondant respectivement à des rayons tangents à l'émetteur issus d'un point de ce dernier tel que la distance de ce point au point d'impact M' ou M'' sur la lentille soit minimal ($\vec{i}'$) ou maximal ($\vec{i}''$) en projection sur l'axe transverse x. En absence de dioptre, ce sont les rayons $\vec{i}'$ et $\vec{i}''$ qui sont directement tangents à l'émetteur lumineux.

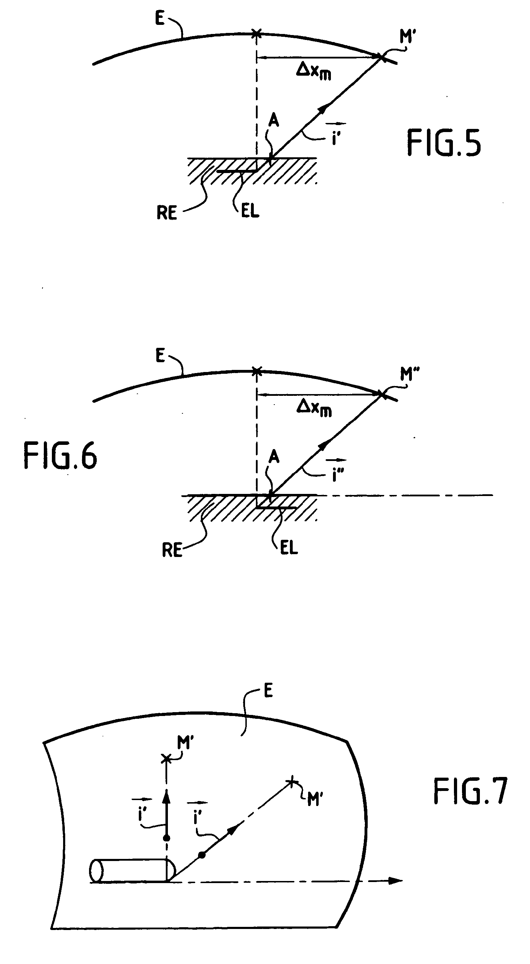

Relativement à la deuxième méthode exposée ci-dessus, les Figs.5 et 6 montrent en vue de dessus le cas d'une source plane, par exemple une puce LED, immergée dans une résine et ayant une face de sortie plane, perpendiculaire à l'axe optique. Les repères EL et RE désignent respectivement l'émetteur lumineux et la résine. Dans ce cas particulier, la variable intermédiaire A, représentant le point d'émergence du rayon lumineux sur la face de sortie plane, peut être déterminée analytiquement en résolvant une équation du 4$^{ième}$ degré.

Toujours relativement à la deuxième méthode, la Fig.7 montre le cas d'un filament. Dans ce cas, le rayon $\vec{i}'$ est tangent au cylindre modélisant le filament en un point appartenant au cercle situé à l'extrémité du filament ou à la coupe du filament par un plan x = M'$_x$.

L'écriture de la condition d'horizontalité des rayons émergeants $\vec{e}$ conduit à une équation aux dérivées partielles de la surface de sortie S recherchée. Cette équation aux dérivés partielles peut être résolue par des méthodes numériques sachant que deux bords sont connus et constituent des conditions aux limites autorisant le calcul.

Les deux bords connus autorisant la résolution de l'équation aux dérivées partielles de la surface de sortie S découlent du choix « arbitraire » de la génératrice $G_h$ et de la seconde contrainte 2) (indiquée ci-dessus) imposée à $G_h$.

En effet, du fait de la contrainte 2), les rayons émergeants $\vec{e}$ correspondant dans le plan $\pi(\theta=0)$ aux rayons incidents $\vec{i}$ tangents à la projection du filament 101 sont parallèles à l'axe Y-Y, de façon que la coupe de la face de sortie S par le plan vertical $\pi(\theta=0)$ peut être obtenue par un calcul d'optique à deux dimensions (2D). La projection du filament 101 dans le plan $\pi(\theta=0)$ est alors un cercle dont le rayon est celui du filament 101.

Il est obtenu une équation différentielle qui peut être résolue par une méthode numérique.

Par exemple, des résultats satisfaisants ont été obtenus en assimilant la tangente à la corde et en faisant un calcul progressif à partir du point de coordonnée z=0 pour lequel l'épaisseur au centre de la lentille est un paramètre de construction connu.

Il est maintenant décrit ci-dessous un exemple de résolution par la méthode des différences finies de l'équation aux dérivées partielles de la surface de sortie S recherchée. Dans cet exemple, il est fait appel à un calcul progressif qui est effectué « ligne verticale par ligne verticale », en déplaçant le point de départ de chaque ligne le long d'une discrétisation de la génératrice $G_h$. Un avantage de l'approche ci-dessus, indiquée à titre d'exemple, est que chaque point de la surface de sortie S est calculable de manière analytique du fait que deux points voisins sont connus.

On note :

P, un point quelconque sur la ligne verticale considérée de la surface de sortie S,

$Po$, $\overline{P}$, des points de la surface S voisins du point P et supposés connus,

$\vec{r}$, le rayon diffracté issu du rayon incident $\vec{i}$ impactant la surface d'entrée E,

$\vec{e}$, le rayon émergeant au point P de la surface de sortie S,

$\vec{N}$, la normale à la surface de sortie S au niveau du point P,

n, indice de réfraction du matériau de la lentille L, et

$\mu$, inconnue intermédiaire recherchée.

Les relations suivantes peuvent être écrites :

$$P = M + \mu . \vec{r} \, ,$$

$\vec{N}$ colinéaire à $n\vec{r} - \vec{e}$, et

$$\vec{N} \approx \overrightarrow{PoP} \wedge \overrightarrow{Po\overline{P}} \, .$$

A partir des relations ci-dessus, sachant que $\vec{e}$ est normé et horizontal, il est obtenu une équation du second degré en $\mu$ de la forme $A\mu^2 + B\mu + C = 0$, où

$$A = V2_z^2 - n^2k_2^2 - n^2k_4^2$$

$$B = 2(V1_zV2_z - n^2k_1k_2 - n^2k_3k_4)$$

$$C = V1_z^2 - n^2k_1^2 - n^2k_3^2 \, .$$

avec,

$$k_1 = r_xV1_z - r_zV1_x$$

$$k_2 = r_xV2_z - r_zV2_x$$

$$k_3 = r_yV1_z - r_zV1_y$$

$$k_4 = r_yV2_z - r_zV2_y$$

et,

$$\overrightarrow{V1} = \overrightarrow{PoM} \wedge \overrightarrow{PM}$$

$$\overrightarrow{V2} = (\vec{r} \wedge \overrightarrow{\overline{P}Po})$$

L'inconnue $\mu$ est calculable pour chacun des points P considérés, ce qui autorise donc la construction de la surface de sortie S.

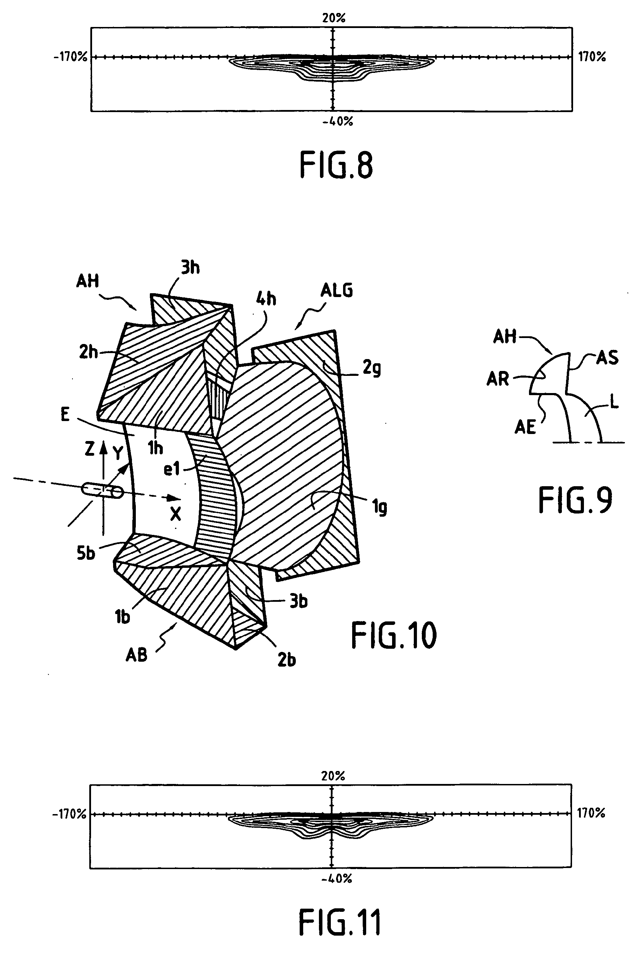

La Fig.8 illustre le réseau de courbes isolux obtenues avec une lampe H11, une lentille L de 48x34 mm$^2$ en vue de face et un encombrement en profondeur du système lentille-lampe de 42 mm environ.

Conformément à l'invention, dans la mesure où le volume disponible l'autorise, la lentille L peut être complétée par des ailes destinées à optimiser les performances optiques du projecteur.

Ainsi, il est possible de compléter la lentille L par des ailes supérieure, inférieure et/ou latérales.

Comme montré en coupe à la Fig.9 de manière schématique, l'aile supérieure AH comprend une surface d'entrée AE, une surface réfléchissante AR et une surface de sortie AS.

De préférence, afin d'arriver à des dimensions réduites, la surface d'entrée AE est choisie de façon à rabattre le plus possible les rayons vers l'arrière. Une surface AE de type plan ou conique globalement horizontale et s'étendant du bord de la lentille L jusqu'au dessus du filament 101 est un compromis acceptable pour certaines applications de l'invention.

La surface réfléchissante AR peut être définie de façon à fonctionner en réflexion totale, partielle ou spéculaire. Le choix du type de réflexion de la surface AR est lié au choix de la surface d'entrée AE. La réflexion totale offre l'avantage d'un bon rendement et de la simplicité de réalisation, notamment par rapport à la réflexion spéculaire qui demande le dépôt d'un revêtement réfléchissant.

Pour la construction de la surface réfléchissante AR et de la surface de sortie AS, l'homme du métier pourra utiliser avantageusement des principes de calcul analogues à ceux exposés ci-dessus à titre d'exemple pour la construction de la lentille L, en adaptant le choix des rayons extrêmes.

La Fig.10 montre une demi-vue en perspective des surfaces optiques actives obtenues pour une lentille L2 selon l'invention incorporée dans un projecteur équipé d'une source lumineuse 6 à plusieurs diodes électroluminescentes groupées dans un module multi-puces (dite ci-après source «multi-LED»).

On notera ici que les principes de construction de la lentille exposés ci-dessus pour une source à filament s'appliquent aussi au cas d'une source multi-LED ou d'une source comprenant une seule diode électroluminescente (LED).

Ainsi, par exemple, dans le cas d'une source multi-LED ayant une forme plane et rectangulaire, les rayons lumineux extrêmes à considérer dans les constructions sont ceux issus des coins adéquats de la projection rectangulaire de la source et non pas ceux tangents à la projection elliptique de l'extrémité d'un cylindre comme pour le filament 101.

Dans la Fig.10, la lentille L2 est observée du côté de la source lumineuse 6. La partie non représentée de la lentille L2 à la Fig.10 est similaire à celle représentée, par rapport au plan de coupe de la demi-vue.

Des surfaces optiques des ailes supérieure AH, inférieure AB et latérale gauche ALG sont visibles à la Fig.10.

Des surfaces optiques 1 h, 2h, 3h et 4h sont apparentes à la Fig.10 pour l'aile supérieure AH. Des surfaces optiques 1 b, 2b, 3b et 5b sont apparentes pour l'aile inférieure AB. L'aile latérale gauche ALG est représentée par les surfaces optiques 1 g et 2g.

Concernant les ailes latérales, dans ce mode de réalisation, la surface 1 g fonctionne en réflexion totale et la surface de sortie 2g est un prisme.

Comme montré également à la Fig.10, la face d'entrée torique E de la lentille L est prolongée par une face d'entrée torique supplémentaire e1 associée à l'aile latérale gauche ALG. Bien entendu, une autre face d'entrée torique supplémentaire e2 (non représentée) est associée à l'aile latérale droite ALD (non représentée).

Les faces d'entrée supplémentaires e1 et e2 permettent avantageusement d'obtenir une face d'entrée lisse. Pour la construction de ces faces d'entrée e1 et e2, l'homme du métier devra garder à l'esprit que les surfaces d'entrée associées aux ailes latérales doivent respecter une condition minimum qui est que les rayons lumineux qu'elles réfractent ne doivent avoir aucune intersection avec ceux réfractés par une face d'entrée adjacente. De plus, la continuité des surfaces est indispensable afin d'éviter la production d'une famille de rayons lumineux non maîtrisés.

La Fig.11 illustre un réseau de courbes isolux obtenues avec la lentille L2 de la Fig.6 et une source multi-LED délivrant 99 lumens.

L'utilisation d'une source du type ci-dessus émettant dans un demi-espace présente l'avantage d'offrir un rendement élevé en flux lumineux, par rapport à une source à filament dont la moitié du flux lumineux est perdue.

Ainsi, les essais effectués par l'entité inventive ont mis en évidence la possibilité d'obtenir des rendements en flux lumineux qui sont supérieurs à 70%.

Bien entendu, la présente invention ne se limite pas aux détails des modes de réalisation décrits ici à titre d'exemple, mais s'étend au contraire aux modifications à la portée de l'homme du métier sans sortir du cadre de l'invention.

Ainsi, par exemple, on notera que selon les modes de réalisation et les applications de l'invention, il est possible de segmenter la lentille et les ailes en pavés ou blocs comme une lentille de Fresnel afin de réduire leur épaisseur, c'est-à-dire, de « fresneliser » ces composants optiques.

Par ailleurs, dans certains modes de réalisation de l'invention, la source lumineuse et la lentille peuvent être formées en un seul bloc. La source lumineuse comporte alors typiquement plusieurs puces de diodes électroluminescentes et la lentille est formée d'un matériau synthétique thermorésistant qui est surmoulé au-dessus des surfaces lumineuses des puces.

**Revendications**

1. Projecteur lumineux de faible encombrement, pour véhicule automobile, donnant un faisceau lumineux à coupure, en particulier du type anti-brouillard, admettant un axe optique (Y) et comprenant une source lumineuse (10) ayant un axe sensiblement horizontal s'étendant sensiblement perpendiculairement audit axe optique du projecteur, ne comportant aucun réflecteur, et comportant devant la source lumineuse une lentille (L) déterminée pour donner un faisceau lumineux à coupure, **caractérisé en ce que** ladite lentille (L) est déterminée de telle manière que des rayons incidents extrêmes ($\vec{i'}$, $\vec{i''}$) émis par certains points aux contours de ladite source (10) soient réfractés, en sortie de ladite lentille (L), sensiblement parallèlement audit axe optique (Y), tandis que les autres rayons lumineux incidents émis par ladite source (10) sont réfractés avec une inclinaison vers le bas par rapport audit axe optique (Y).

2. Projecteur selon la revendication 1, **caractérisé en ce que** ladite lentille (L) comporte au moins une aile supérieure (AH) et/ou inférieure (AB) participant à la formation dudit faisceau lumineux à coupure, ladite aile (AH) étant sensiblement horizontale et perpendiculaire audit axe optique (Y).

3. Projecteur selon l'une quelconque des revendications 1 ou 2, **caractérisé en ce que** ladite lentille (L) comporte au moins une aile latérale gauche (ALG) et/ou droite participant à la formation du faisceau lumineux à coupure, ladite aile (ALG) étant sensiblement verticale et perpendiculaire audit axe optique (Y).

4. Projecteur selon l'une quelconque des revendications 1 à 3, **caractérisé en ce que** ladite lentille (L) comprend une face d'entrée (E) située à proximité de ladite source (10).

5. Projecteur selon la revendication 4, **caractérisé en ce que** ladite face d'entrée (E) est de type torique, sphérique ou cylindrique.

6. Projecteur selon l'une quelconque des revendications 1 à 5, **caractérisé en ce que** ladite source lumineuse est une lampe (10) avec filament axial (101) et est disposée de manière sensiblement transversale, lesdits rayons extrêmes ($\vec{i'}$, $\vec{i''}$) étant tangents respectivement aux contours extrêmes arrière et avant de la projection orthogonale du filament (101) de ladite lampe (10) dans un plan vertical $\pi(\theta)$ passant par le centre (O) dudit filament (101) et formant un angle ($\theta$) avec l'axe optique (Y-Y), lesdits rayons extrêmes ($\vec{i'}$, $\vec{i''}$) étant contenus dans ce dit plan vertical $\pi(\theta)$.

7. Projecteur selon la revendication 6, **caractérisé en ce que** ladite source lumineuse est une lampe à filament (10) de type H7, H8 ou H11.

8. Projecteur selon l'une quelconque des revendications 1 à 5, **caractérisé en ce que** ladite source lumineuse est de type à diode électroluminescente (EL) comprenant un émetteur lumineux, lesdits rayons extrêmes ($\vec{i'}$, $\vec{i''}$) étant tangents au dit émetteur lumineux.

9. Projecteur selon la revendication 8, **caractérisé en ce que** ladite source lumineuse est formée de plusieurs diodes électroluminescentes (EL).

10. Projecteur selon l'une quelconque des revendications 1 à 3, **caractérisé en ce que** ladite source lumineuse (EL) et ladite lentille (L, RE) sont formées en un seul bloc, ladite source lumineuse (EL) étant formée d'une ou plusieurs diodes électroluminescentes et ladite lentille étant formée d'un matériau synthétique thermorésistant qui est surmoulé au moins sur une surface lumineuse de ladite source (EL).

11. Projecteur selon l'une quelconque des revendications 1 à 10, **caractérisé en ce que** ladite lentille (L) est du type lentille de Fresnel et comporte en sortie des parties dites fresnelisées.

**Claims**

1. Compact light for a motor vehicle, giving a light beam with cutoff, in particular of the fog type, having an optical axis (Y) and comprising a light source (10) having a substantially horizontal axis extending substantially perpendicular to the said optical axis of the light, not having any reflector and comprising, in front of the light source, a lens (L) determined so as to give a light beam with cutoff, **characterised in that** the said lens (L) is determined so that extreme incident rays ($\vec{i'}$, $\vec{i''}$) emitted by certain points of the contours of the said source (10) are refracted, at the exit from the said lens (L), substantially parallel to the said optical axis (Y), whilst the other incident light rays emitted by the said source (10) are refracted with a downward inclination with respect to the said optical axis (Y).

2. Light according to claim 1, **characterised in that** the said lens (L) comprises at least one top (AH) and/or bottom (AB) wing participating in the formation of the said light beam with cutoff, the said wing (AH) being substantially horizontal and perpendicular to the said optical axis (Y).

3. Light according to either one of claims 1 to 2, **characterised in that** the said lens (L) comprises at least one left-hand (ALG) and/or right-hand lateral wing participating in the formation of the light beam with cutoff, the said wing (ALG) being substantially vertical and perpendicular to the said optical axis (Y).

4. Light according to any one of claims 1 to 3, **characterised in that** the said lens (L) comprises an entry face (E) situated close to the said source (10).

5. Light according to claim 4, **characterised in that** the said entry face (E) is of the toric, spherical or cylindrical type.

6. Light according to any one of claims 1 to 5, **characterised in that** the said light source is a lamp (10) with an axial filament (101) and is disposed substantially transversely, the extreme rays $(\vec{i}, \vec{i}')$ being tangent respectively to the rear and front extreme contours of the orthogonal projection of the of the filament (101) of the said lamp (10) in a vertical plane $\pi(\theta)$ passing through the centre (O) of the filament (101) and forming an angle $(\theta)$ with the optical axis (Y-Y), the said extreme rays $(\vec{i}, \vec{i}')$ being contained in this said vertical plane $\pi(\theta)$.

7. Light according to claim 6, **characterised in that** the said light source is a filament lamp (10) of the H7, H8 or H11 type.

8. Light according to any one of claims 1 to 5, **characterised in that** the said light source is of the light emitting diode (EL) type, comprising a light emitter, the said extreme rays $(\vec{i}, \vec{i}')$ being contained in this said vertical plane $\pi(\theta)$.

9. Light according to claim 8, **characterised in that** the said light source is formed by several light emitting diodes (EL).

10. Light according to any one of claims 1 to 3, **characterised in that** the said light source (EL) and the said lens (L, RE) are formed in a single unit, the said light source (EL) being formed from one or more light emitting diodes and the said lens being formed from a heat-resistant synthetic material which is moulded onto at least one luminous surface of the said source (EL).

11. Light according to any one of claims 1 to 10, **characterised in that** the said lens (L) is of the Fresnel lens type and comprises so-called fresnelised parts at the exit.

**Patentansprüche**

1. Kompakter Kraftfahrzeugscheinwerfer, der ein Lichtbündel mit Hell-Dunkel-Grenze, insbesondere vom Typ Nebellicht erzeugt, eine optische Achse (Y) aufweist und eine Lichtquelle (10) mit einer im Wesentlichen waagerechten, zur optischen Achse des Scheinwerfers im Wesentlichen lotrecht verlaufenden Achse umfasst, der keinen Reflektor aufweist und vor der Lichtquelle eine Linse (L) umfasst, die zum Erzeugen eines Lichtbündels mit Hell-Dunkel-Grenze bestimmt ist,
**dadurch gekennzeichnet, dass** die Linse (L) so definiert ist, dass die von bestimmten Punkten an den Rändern der Lichtquelle (10) emittierten, äußersten auftreffenden Lichtstrahlen $(\vec{i}, \vec{i}')$ beim Austritt aus der Linse (L) im Wesentlichen parallel zur optischen Achse (Y) gebrochen werden, während die anderen von der Lichtquelle (10) emittierten auftreffenden Lichtstrahlen nach unten zur optischen Achse (Y) geneigt gebrochen werden.

2. Scheinwerfer nach Anspruch 1,
**dadurch gekennzeichnet, dass** die Linse (L) wenigstens einen oberen Flügel (AH) und/oder unteren Flügel (AB) aufweist, der bzw. die an der Bildung des Lichtbündels mit Hell-Dunkel-Grenze mitwirken, wobei der Flügel (AH) im Wesentlichen waagerecht und zur optischen Achse (Y) lotrecht ist.

3. Scheinwerfer nach einem der Ansprüche 1 oder 2,
**dadurch gekennzeichnet, dass** die Linse (L) wenigstens einen linken Seitenflügel (ALG) und/oder einen rechten Seitenflügel aufweist, der bzw. die an der Bildung des Lichtbündels mit Hell-Dunkel-Grenze mitwirken, wobei der Flügel (ALG) im Wesentlichen senkrecht und zur optischen Achse (Y) lotrecht ist.

4. Scheinwerfer nach einem der Ansprüche 1 bis 3,
**dadurch gekennzeichnet, dass** die Linse (L) eine Eintrittsfläche (E) aufweist, die in der Nähe der Lichtquelle (10) liegt.

5. Scheinwerfer nach Anspruch 4,
**dadurch gekennzeichnet, dass** die Eintrittsfläche (E) von torischer, sphärischer oder zylindrischer Art ist.

6. Scheinwerfer nach einem der Ansprüche 1 bis 5,
**dadurch gekennzeichnet, dass** die Lichtquelle eine Lampe (10) mit axialer Glühwendel (101) ist und im Wesentlichen transversal angeordnet ist, wobei die äußersten Lichtstrahlen $(\vec{i}, \vec{i}')$ den äußeren hinteren bzw. vorderen Rand der Orthogonalprojektion der Glühwendel (101) der Lampe (10) in einer vertikalen Ebene $\pi(0)$ tangieren, die durch den Mittelpunkt (O) der Glühwendel (101) verläuft und mit der optischen Achse (Y-Y) einen Winkel $(\theta)$ bildet, wobei die äußersten Lichtstrahlen $(\vec{i}, \vec{i}')$ in dieser vertikalen Ebene $\pi(6)$ enthalten sind.

7. Scheinwerfer nach Anspruch 6,
**dadurch gekennzeichnet, dass** die Lichtquelle eine Glühlampe (10) vom Typ H7, H8 oder H 11 ist.

8. Scheinwerfer nach einem der Ansprüche 1 bis 5, **dadurch gekennzeichnet, dass** die Lichtquelle vom Typ Leuchtdiode (EL) ist, die eine Strahlungsquelle aufweist, wobei die äußersten Lichtstrahlen ($\vec{r}$,$\vec{r}''$) die Strahlungsquelle tangieren.

9. Scheinwerfer nach Anspruch 8, **dadurch gekennzeichnet, dass** die Lichtquelle von mehreren Leuchtdioden (EL) gebildet ist.

10. Scheinwerfer nach einem der Ansprüche 1 bis 3, **dadurch gekennzeichnet, dass** die Lichtquelle (EL) und die Linse (L, RE) aus einem einzigen Stück gebildet sind, wobei die Lichtquelle (EL) von einer oder mehreren Leuchtdioden gebildet ist und die Linse aus einem hitzebeständigen synthetischen Material gebildet ist, das auf wenigstens eine Leuchtfläche der Lichtquelle (EL) aufgespritzt ist.

11. Scheinwerfer nach einem der Ansprüche 1 bis 10, **dadurch gekennzeichnet, dass** die Linse (L) vom Typ Fresnel-Linse ist und am Ausgang sogenannte Fresnelsche Bereiche aufweist.

FIG.1

FIG.2

FIG.3

FIG.4

FIG.5

FIG.6

FIG.7

FIG.8

FIG.10

FIG.9

FIG.11

**EP 1 703 198 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0411785 A